# EUROPEAN PATENT SPECIFICATION

(11) **EP 2 743 074 B1**
(45) Date of publication and mention of the grant of the patent: **21.11.2018**
(21) Application number: 13190984.8
(22) Date of filing: 31.10.2013
(51) Int. Cl.: B32B 5/00, B32B 5/24, B32B 7/00, B32B 7/02, B32B 7/04, B32B 11/00, B32B 11/02, B32B 11/04, B32B 11/10, B32B 27/00, B32B 27/02, B32B 27/06, B32B 27/12, B32B 27/32, B32B 27/36, B32B 3/02, B32B 3/28, B32B 3/30, B32B 3/26, E04D 12/00, E04D 5/10

(54) **Under tile sheet for waterproofing roofs of buildings having anti-slip properties**
Unterdachziegelbahn für Dachwasserdichtung von Gebäude mit Anti-Slip Eigenschaften
Bande de sous-tuile destiné pour l'étanchement à l'eau de toiture de bâtiment ayant les caractères du type anti-glissant

(30) Priority: 17.12.2012 IT MI20120442 U
(43) Date of publication of application: 18.06.2014
(73) Proprietor: Silcart S.p.A., 31030 Carbonera, Frazione Mignagola TV (IT)
(72) Inventor: Faotto, Ugo, 31030 Carbonera, TREVISO (IT)
(74) Representative: Mozzi, Matteo

(56) References cited:
- EP-A1- 1 528 178
- EP-A2- 0 905 303
- EP-A2- 1 624 120
- WO-A1-98/41710
- DE-U1- 29 505 288
- JP-A- H0 642 119
- KR-A- 20050 031 088
- US-B1- 6 360 506

## Description

The present invention relates to a multilayered under tile sheet for waterproofing roofs of buildings, particularly an under tile sheet having anti-slip properties.

As it is known, in manufacturing roofs or similar covering of buildings, it is necessary to insert sheets that are capable of making the roofs impermeable to water, and permeable or impermeable to water vapor, as well as to ensure a suitable thermal insulation of the building.

Generally, waterproofing under tile sheets are located in ventilation compartments of a roof, which are arranged below the covering tiles, for example, above a wood decking with inclined pitches of the roof. In such a manner, the under tile sheets are interposed between the above-mentioned decking and an insulation panel.

During the laying operation on a roof with inclined pitches, such under tile sheets are first laid on the pitched decking, and subsequently they are secured to the same decking by means of braces or nails.

However, the under tile sheets of a known type, particularly those that are made of plastic material, have some drawbacks. Particularly, the characteristics of a surface layer of such sheets do not allow an operator responsible for the laying to walk safely on the sheets once the latter ones are secured to the roof. In fact, the operator would risk to slip from the roof while walking on such surfaces, particularly in the case of roofs with particularly inclined pitches. Therefore, the above-mentioned limitation of the waterproofing under tile sheets of a known type reduces the safety of the operator him/herself during the installation step of the sheet.

DE29505288U discloses a a multilayer sheet for waterproofing a roof comprising a substrate covered on both sides by a bitumen coating, and a non-woven cover comprising perforations and protuberances.

The object of the present invention is to devise and provide a multilayered under tile sheet for waterproofing roofs of buildings, which is improved and allows at least partially obviating the drawback set forth herein above with reference to the under tile sheets of a known type.

Such an object is achieved by a multilayered under tile sheet for waterproofing roofs of buildings in accordance with claim 1.

Alternative embodiments of such a sheet are described in the dependent claims.

Further characteristics and advantages of the under tile sheet according to the present invention will be apparent from the description set forth below of preferred implementation examples, given by way of illustrative, non-limiting example, with reference to the appended Figures, in which:
- Fig. 1 illustrates in a perspective, exploded view a portion of a multilayered under tile sheet for waterproofing roofs of buildings according to a preferred embodiment of the invention;
- Fig. 2 illustrates an enlargement of a portion of the under tile sheet of Fig. 1.

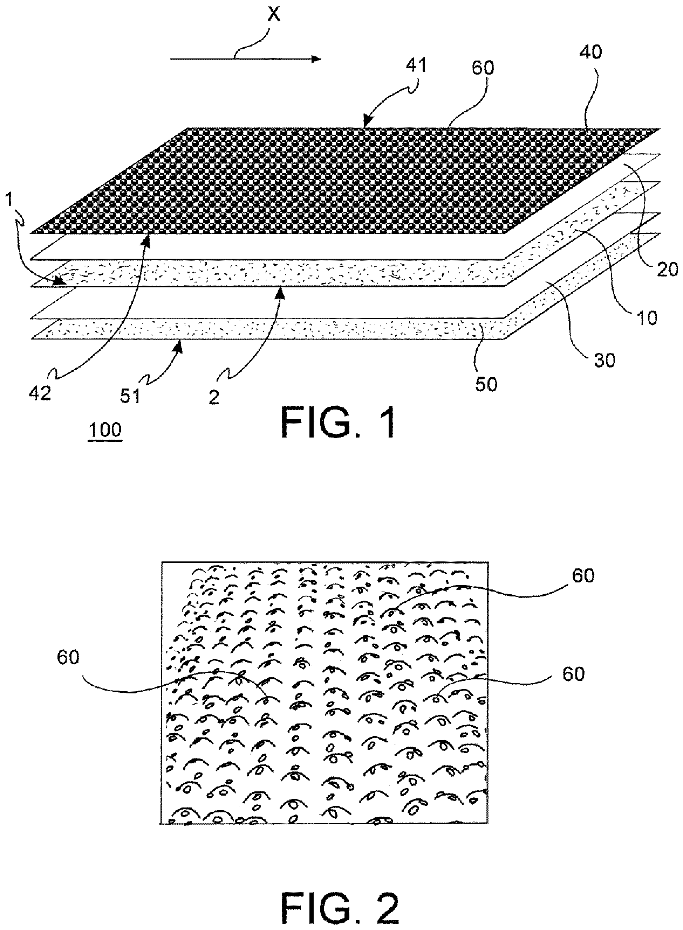

With reference to the above-mentioned Figs. 1-2, a multilayered under tile sheet for waterproofing roofs of buildings or similar covering according to the invention on the whole is indicated with the numeral reference 100. In the above-mentioned Figs. 1-2, identical or similar elements are indicated by the same numeral references.

Herein below, by the terms "sheet for waterproofing" or "waterproofing sheet", a sheet will be meant, which is configured so as to be water-proof. On the other hand, according to the applications, such waterproofing sheet may be implemented so as to be permeable to water vapor, or only partially permeable to water vapor, or substantially impermeable to vapor. Furthermore, there are sheets configured so as to adapt to the conditions of temperature and relative humidity (RH), and to act as transpiring sheets or as vapor barrier sheets. Such sheets are generally referred to as sheets with a variable Sd by those skilled in the art.

Furthermore, herein below, the multilayered under tile sheet 100 of the invention will be also referred to as under tile sheet, or simply sheet.

With reference to. Fig. 1, in an embodiment, the under tile sheet 100 comprises five layers. Particularly, such under tile sheet 100 comprise a reinforcement layer in a fibrous material having a first 1 and an opposite second 2 faces.

Furthermore, the sheet 100 comprises a first 20 and a second 30 membrane layers, or simply waterproof membranes that are connected, respectively, to the above-mentioned first 1 and second 2 face of the reinforcement layer 10. It shall be noticed that the above-mentioned waterproof membranes 20,30 are connected to the entire surface of the faces 1 and 2 of the reinforcement layer 10. In other terms, the reinforcement layer 10 is interposed between the first 20 and the second 30 waterproof membrane.
The reinforcement layer 10 is made of a material selected from the group consisting of:
- a synthetic fabric or a synthetic non-woven fabric, such as, for example, polypropylene, polyethylene, polyester (polyethylene terephthalate);
- glass fiber;
- a synthetic composite fabric or non-woven fabric;
- a natural fabric or a natural non-woven fabric.
For example, such reinforcement layer 10 in fibrous material has a weight in grams per square meter (grammage) ranging between 50 and 200 g/m².

Furthermore, both the first 20 and the second 30 waterproof membrane are made of a blend comprising: bitumen, polymers, and a filler.

It shall be noticed that the reinforcement layer 10 is suitable to impart a mechanical strength to tearing, crushing, and traction to the sheet 100. The first 20 and second 30 bituminous waterproof membranes impart waterproofing properties and water vapor permeability/impermeability properties to the sheet 100.

Furthermore, the under tile sheet 100 comprises a first 40 and a second 50 fibrous material layers connected to the first 20 and to the second 30 waterproof membrane, respectively. Particularly, the first membrane 20 is interposed between the reinforcement layer 10 and the first fibrous layer 40, and the second membrane 30 is interposed between the same reinforcement layer 10 and the second fibrous layer 50.

Such first 40 and second 50 layer in fibrous material are made of a material selected from the group consisting in:
- a synthetic fabric or synthetic non-woven fabric, such as, for example, polypropylene, polyethylene terephthalate, polyethylene;
- a synthetic composite fabric or non-woven fabric;
- a natural fabric or non-woven fabric.
Furthermore, such first 40 and second 50 fibrous layer represent external finishing layers of the sheet 100 and have a weight in grams per square meter ranging, for example, between 10 and 80 g/m².

Advantageously, in accordance with the present invention, at least one of the above-mentioned fibrous layers 40, 50 comprises, on a face 41 opposite a further face 42 adjacent to one of the impermeable membranes, a multiplicity of protuberances 60. In the example of Fig. 1, only the first fibrous layer 40 comprises such protuberances 60, or cusps, protruding from the face 41 of the same first fibrous layer 40 in a direction moving away from the first waterproofing membrane 20.

Particularly, such protuberances or cusps 60 projecting from the a face 41 of the first fibrous layer 40 have an average length ranging between about 0.5mm and 3mm.

In more detail, with reference to Fig. 1 and to the enlarged image of Fig. 2, such protuberances 60 are arranged on the face 41 so as to form substantially mutually parallel rows extending along a direction substantially longitudinal of the sheet 100 indicated in Fig. 1 by the arrow X.

It shall be noticed that the average distance between one of said protuberances 60 and the adjacent protuberances ranges between about 1mm and 5mm. Furthermore, the thickness of the first fibrous layer 40 ranges between about 0.5mm and 3mm.

It shall be noticed that such protuberances 60 are the result of a mechanical drilling operation of the first fibrous layer 40 performed (for example, by a needle, a nail, or the like) starting from the further face 42 of such layer. Every time a hole is drilled on the further face 42, such operation creates a corresponding cusp 60 projecting from the face 41 of the first fibrous layer 40. Furthermore, since it is a mechanical operation, drilling the first fibrous layer 41 does not affect the chemical-physical of the non-woven fabric.

With regard to a manufacturing method of the under tile sheet 100 of the invention, the reinforcement layer 10, for example, of polypropylene or glass fiber non-woven fabric, is impregnated on both the opposite faces 1,2 with the bituminous blend that will form the first 20 and the second 30 waterproofing membranes.

The first fibrous layer 40 provided with protuberances 60 is then applied upon the bituminous blend that will form the first membrane 20. Particularly, the further face 42 of the first fibrous layer 40 adheres to the reinforcement layer 10 by exploiting the adhesive property of the bituminous blend yet not hardened to constrain the first fibrous layer 40 to the reinforcement layer 10.

Similarly, the finishing second fibrous layer 50 is applied onto the bituminous blend that will form the second membrane 30 by adhering to the reinforcement layer 10 on the entire surface.

In a further embodiment, the second fibrous layer 50 may also comprise the above-mentioned cusps 60 projecting from a corresponding face 51 opposite the face adjacent to the second waterproofing membrane 30 and in a direction moving away from such second membrane 30.

The under tile sheet 100 of the present invention has a number of advantages.

Particularly, once the sheet 100 has been laid on and secured to the roof, if the face 41 provided with cusps 60 of the first fibrous layer 40 corresponds to the upper face of the entire sheet 100 and, consequently, the second fibrous layer 50 is in contact with the outer surface of the roof, the cusps 60 are so configured as to create a friction between the shoe soles of an operator walking on the laid sheet and the sheet itself. In other terms, the sheet 100 has anti-slip properties, so that the operator involved in the laying may walk with an improved safety on the sheet 100 without the risk of slipping, as occurs with the known sheets.

In the case that the face provided with cusps 60 is the respective face 51 of the finishing second fibrous layer 50, i.e., the lower face of the sheet 100 in direct contact with the roof outer surface, the cusps 60 create a friction between the sheet 100 and the roof, thus avoiding the same sheet from slipping during the laying operations, particularly in the case of a roof with very inclined pitches.

Both advantages are achieved in the case of a sheet 100 comprising the cusps 60 simultaneously projecting on the face 41 of the first fibrous layer 40 and on the homologous face 51 of the second fibrous layer 50.

Furthermore, it shall be noticed that the fact of providing one of or both the fibrous layers 40,50 for the finishing of the sheet 100 provided with the above-mentioned protuberances 60 leaves substantially unchanged the other properties of the same sheet, such as mechanical strength, impermeability to water, the effects of thermal insulation that are ensured by the sheet, and ultraviolet radiation resistance.

Furthermore, when the sheets 100 of the invention are installed interposed, for example, between a deking of a roof with inclined pitches and an insulation panel, the protuberances 60 projecting from the first finishing layer 40 are suitable to form, between the sheet 100 and the panel, an interspace layer acting as a ventilation micro-chamber extending on the entire surface of the sheet 100, since the protuberances 60 are not crushed by the weight of the commonly used insulating panels.

To the above-described embodiments of a multilayered under tile sheet, those of ordinary skill in the art, in order to meet contingent needs, will be able to make modifications, adaptations, and replacements of elements with other functionally equivalent ones, without departing from the scope of the following claims. Each of the characteristics described as belonging to a possible embodiment may be implemented independently from the other embodiments described.

## Claims

1. A multilayered under tile sheet (100) for waterproofing a roof of a building, comprising:
- a reinforcement layer (10) in fibrous material having a first (1) and an opposite second (2) faces;
- a first (20) and a second (30) water-proof membrane, connected to said first (1) and second (2) faces of the reinforcement layer (10), respectively, on the entire surface of said faces;
- a first (40) and a second (50) layer in fibrous material connected to said first (20) and second (30) water-proof membrane, respectively, said first membrane being interposed between the reinforcement layer (10) and said first fibrous layer (40), and said second membrane being interposed between the reinforcement layer (10) and said second fibrous layer (50), at least one of said first (40) and second (50) fibrous layers comprises, on a face (41,51) opposite a further face (42) adjacent to one of the impermeable membranes, a multiplicity of protuberances (60),
**characterized in that**
said protuberances (60) are created by performing a mechanical drilling operation of the at least one of said first (40) and second (50) fibrous layers, said drilling operation being performed starting from the further face (42) of said layer.

2. The multilayered under tile sheet (100) according to claim 1, wherein the thickness of the at least one of said first (40) and second (50) fibrous layers ranges between 0.5mm and 3mm.

3. The multilayered under tile sheet (100) according to claim 1, wherein said protuberances (60) protrude in a direction substantially orthogonal to said face (41) and have an average length ranging between 0.5mm and 3mm.

4. The multilayered under tile sheet (100) according to claim 1, wherein said protuberances (60) are aligned along a substantially longitudinal direction (X) of the sheet to form mutually parallel rows.

5. The multilayered under tile sheet (100) according to claim 4, wherein an average distance between one of said protuberances (60) and the adjacent protuberances ranges between 1mm and 5mm.

6. The multilayered under tile sheet (100) according to claim 1, wherein said reinforcement layer (10) is made of a material selected from the group consisting in:
- a synthetic fabric or a synthetic non-woven fabric, such as, for example, polypropylene and polyethylene terephthalate;
- glass fiber;
- a synthetic composite fabric or non-woven fabric;
- a natural fabric or non-woven fabric.

7. The multilayered under tile sheet (100) according to claim 1 or 6, wherein said reinforcement layer in fibrous material (10) has a weight in grams per square meter ranging between 50 and 200 g/m².

8. The multilayered sheet (100) according to claim 1, wherein the at least one between said first (40) and second (50) layers in fibrous material is made of a material selected from the group consisting in:
- a synthetic fabric or a synthetic non-woven fabric, such as, for example, polypropylene, polyethylene terephthalate, polyethylene;
- a synthetic composite fabric or non-woven fabric;
- a natural fabric or non-woven fabric.

9. The multilayered under tile sheet (100) according to claim 1, wherein the at least one between the first (40) and second (50) fibrous layers has a weight in grams per square meter ranging between 10 and 80 g/m².

10. The multilayered under tile sheet (100) according to claim 1, wherein said first (20) and second (30) water-proof membrane is produced with a blend comprising: bitumen, polymers, and a filler.

## Patentansprüche

1. Mehrlagige Unterziegelschicht (100) zur Wasserabdichtung eines Dachs eines Gebäudes, wobei sie aufweist:
- eine Verstärkungslage (10) in Fasermaterial, das eine erste (1) und eine entgegengesetzte zweite (2) Seite aufweist;
- eine erste (20) und eine zweite (30) wasserdichte Membran, die jeweils mit der ersten (1) und der zweiten (2) Seite der Verstärkungslage (10) auf der gesamten Oberfläche der Seiten verbunden ist;
- eine erste (40) und eine zweite (50) Lage in faserigem Material, die jeweils mit der ersten (20) und der zweiten (30) wasserdichten Membran verbunden ist, wobei die erste Membran zwischen der Verstärkungslage (10) und der ersten Faserlage (40) eingefügt ist und die zweite Membran zwischen die Verstärkungslage (10) und die zweite Faserlage (50) eingefügt ist, wobei zumindest eine der ersten (40) und zweiten (50) Faserlagen, auf einer Seite (41, 51), die einer der undurchlässigen Membranen benachbarten weiteren Seite (42) entgegengesetzt ist, eine Mehrzahl von Vorsprüngen (60) aufweist, **dadurch gekennzeichnet, dass** die Vorsprünge (60) durch einen mechanischen Bohrvorgang der zumindest einen der ersten (40) und zweiten (50) Faserlagen erzeugt sind, wobei der Bohrvorgang von der weiteren Seite (42) der Lage ausgehend durchgeführt wird.

2. Die mehrlagige Unterziegelschicht (100) nach Anspruch 1, wobei die Dicke der zumindest einen der ersten (40) und zweiten (50) Faserschichten zwischen 0,5mm und 3mm reicht.

3. Die mehrlagige Unterziegelschicht (100) nach Anspruch 1, wobei die Vorsprünge (60) in Richtung angenähert orthogonal zu der Seite (41) vorstehen und eine durchschnittliche Länge im Bereich zwischen 0,5mm und 3mm haben.

4. Die mehrlagige Unterziegelschicht (100) nach Anspruch 1, wobei die Vorsprünge (60) entlang einer angenäherten Längsrichtung (X) der Schicht ausgerichtet sind, um zueinander parallele Reihen zu bilden.

5. Die mehrlagige Unterziegelschicht (100) nach Anspruch 4, wobei ein durchschnittlicher Abstand zwischen einem der Vorsprünge (60) und den benachbarten Vorsprüngen zwischen 1mm und 5mm reicht.

6. Die mehrlagige Unterziegelschicht (100) nach Anspruch 1, wobei die Verstärkungslage (10) aus einem Material hergestellt ist, das aus der Gruppe ausgewählt ist, bestehend in:
- einem synthetischen Tuch oder einem nicht-gewobenen synthetischen Tuch, wie z.B. Polypropylen und Polyethylenterephthalat;
- Glasfaser;
- einem synthetischen Komposittuch oder nicht-gewobenen Tuch;
- einem natürlichen Tuch oder nicht-gewobenen Tuch.

7. Die mehrlagige Unterziegelschicht (100) nach Anspruch 1 oder 6, wobei die Verstärkungslage in Fasermaterial (10) ein Gewicht, in Gramm pro Quadratmeter, im Bereich zwischen 50 und 200 g/m² hat.

8. Die mehrlagige Unterziegelschicht (100) nach Anspruch 1, wobei die zumindest eine der ersten (40) und zweiten (50) Lagen in Fasermaterial aus einem Material hergestellt ist, das aus der Gruppe ausgewählt ist, bestehend in:
- einem synthetischen Tuch oder einem nicht-gewobenen synthetischen Tuch, wie z.B. Polypropylen und Polyethylenterephthalat, Polyethylen;
- einem synthetischen Komposittuch oder nicht-gewobenen Tuch;
- einem natürlichen Tuch oder nicht-gewobenen Tuch.

9. Die mehrlagige Unterziegelschicht (100) nach Anspruch 1, wobei die zumindest eine der ersten (40) und zweiten (50) Faserschichten ein Gewicht in Gramm pro Quadratmeter im Bereich zwischen 10 und 80 g/m² hat.

10. Die mehrlagige Unterziegelschicht (100) nach Anspruch 1, wobei die erste (20) und zweite (30) wasserdichte Membran aus einem Gemisch hergestellt ist, welches Bitumen, Polymere und ein Füllmittel aufweist.

## Revendications

1. Bande de sous-tuile à couches multiples (100) pour l'étanchéité à l'eau d'une toiture d'un bâtiment, comprenant :
- une couche de renfort (10) en matière fibreuse ayant une première face (1) et une seconde (2) face opposée ;
- une première (20) et une seconde (30) membrane étanche à l'eau, reliée auxdites première (1) et seconde (2) faces de la couche de renfort (10), respectivement, sur toute la surface desdites faces ;
- une première (40) et une seconde (50) couche en matière fibreuse reliées auxdites première (20) et seconde (30) membranes étanches à l'eau, respectivement, ladite première membrane étant interposée entre la couche de renfort (10) et ladite première couche fibreuse (40), et ladite seconde membrane étant interposée entre la couche de renfort (10) et ladite seconde couche fibreuse (50), au moins l'une desdites première (40) et seconde (50) couches fibreuses comprend, sur une face (41, 51) opposée à une autre face (42) adjacente à une des membranes imperméables, une multitude de protubérances (60),
**caractérisée en ce que**
lesdites protubérances (60) sont créées en réalisant une opération de perçage mécanique de l'au moins une desdites première (40) et seconde (50) couches fibreuses, ladite opération de perçage étant réalisée à partir de l'autre face (42) de ladite couche.

2. Bande de sous-tuile à couches multiples (100) selon la revendication 1, dans laquelle l'épaisseur de l'au moins une desdites première (40) et seconde (50) couches fibreuses varie de 0,5 mm à 3 mm.

3. Bande de sous-tuile à couches multiples 100) selon la revendication 1, dans laquelle lesdites protubérances (60) font saillie dans une direction sensiblement perpendiculaire à ladite face (41) et ont une longueur moyenne variant de 0,5 mm à 3 mm.

4. Bande de sous-tuile à couches multiples (100) selon la revendication 1, dans laquelle lesdites protubérances (60) sont alignées dans une direction sensiblement longitudinale (X) de la bande pour former des rangées mutuellement parallèles.

5. Bande de sous-tuile à couches multiples (100) selon la revendication 4, dans laquelle la distance moyenne entre une desdites protubérances (60) et les protubérances adjacentes varie de 1 mm à 5 mm.

6. Bande de sous-tuile à couches multiples (100) selon la revendication 1, dans laquelle ladite couche de renfort (10) est en une matière choisie dans le groupe constitué de :
- un tissu synthétique ou un tissu non tissé synthétique, tel que, par exemple, du polypropylène et du polyéthylène téréphtalate ;
- de la fibre de verre ;
- un tissu ou un tissu non tissé synthétique composite ;
- un tissu ou un tissu non tissé naturel.

7. Bande de sous-tuile à couches multiples (100) selon la revendication 1 ou 6, dans laquelle ladite couche de renfort en matière fibreuse (10) a un poids en grammes par mètre carré variant de 50 à 200 g/m².

8. Bande de sous-tuile à couches multiples (100) selon la revendication 1, dans laquelle l'au moins une desdites première (40) et seconde (50) couches en matière fibreuse est en une matière choisie dans le groupe constitué de :
- un tissu synthétique ou un tissu non tissé synthétique, tel que, par exemple, du polypropylène, du polyéthylène téréphtalate, du polyéthylène ;
- un tissu ou un tissu non tissé synthétique composite ;
- un tissu ou un tissu non tissé naturel.

9. Bande de sous-tuile à couches multiples (100) selon la revendication 1, dans laquelle l'au moins une des première (40) et seconde (50) couches fibreuses a un poids en grammes par mètre carré variant de 10 à 80 g/m².

10. Bande de sous-tuile à couches multiples (100) selon la revendication 1, dans laquelle lesdites première (20) et seconde (30) membranes étanches à l'eau sont produites avec un mélange comprenant : du bitume, des polymères et un produit de charge.
